# EUROPEAN PATENT APPLICATION

(11) **EP 2 156 735 A1**
(43) Date of publication of application: **24.02.2010**
(21) Application number: 08162339.9
(22) Date of filing: 13.08.2008
(51) Int. Cl.: A01N 1/02

(54) **Method and instrument for vitrification and storing of biological specimen**

(71) Applicant: Dr. H. Zech GmbH, 6900 Bregenz (AT)
(72) Inventor: Zech, Nicolas, 6900 Bregenz (AT)
(74) Representative: Dr. Graf & Partner

(57) **Abstract**

**SUMMARY**

Storing instrument (1) for vitrification and storing of biological specimen, specifically sperm, oocytes, embryos, morulae or blastocysts comprising:
a storing member (3) which is made of a liquid nitrogen-resistant material, and
a tubular protection member (2) for protecting said storing member (3), the tubular protection member (2) being also made of a liquid nitrogen-resistant material,

wherein said storing member (3) comprises a cylindrical body part (3a) having a cell storing part (3b) at a front portion, and having a rear end part (3c) at an end portion, wherein the cell storing part (3b) is formed as a recess in the body part (3a), and
wherein the storing member (3) having a smaller outer diameter that the inner diameter of the tubular protection member (2) so that the storing member (3) may be inserted and accommodated in the tubular protection member (2).

## Description

### Technical Field

This invention relates to a storing instrument used to vitrity and store a mammalian biological specimen. This invention also relates to a method for vitrification of a mammalian biological specimen, such that the biological specimen remains viable after it is thawed

### Background of the Invention

The ability to cryopreserve oocytes, embryos, blastocysts, and other similar biological specimens is important for the discriminate and widespread application of assisted reproductive technologies. Conventional cryopreservation protocols routinely use slow-cooling for the storage of cells, however survival and development are poor with certain cell types, including oocytes and blastocysts. Due to the large volume and/or complexity of some cells and the high chilling sensitivity of oocytes and early embryos, cryopreservation techniques are not well developed in most species.

Another approach for cryopreserving biological specimens is the method of vitrifying the biological cells. Cryobiological vitrification is characterized by the avoidance of intracellular ice crystal formation during cooling and low temperature storage. Vitrification is a feature of most if not all successful cryopreservation of living cells, since the formation and growth of ice crystals intracellularly has been identified as one of the main causes of cell damage and death in the context of cryopreservation. Ultra-rapid cooling of biological material such as blastocysts is a cryopreservation technique that decreases the likelihood of lethal ice crystals forming through the crystalline phase by inducing the creation of amorphous intracellular parts even with presence of low intracellular concentration of cryoprotectant. Blastocysts have to come into direct contact with liquid nitrogen (LN2) in order to reach sufficiently high cooling rates required for vitrification. Due to the risk of contamination through exposure to liquid nitrogen (LN2), it is, however, advisable to vitrify blastocysts in devices that separate them from LN2 during cooling and storage. A European Parliament directive (EU Tissues and Cells Directive 2004/23/EC), revised in 2006 (COMMISSION Directive 2006/86/EC), defines medical safety requirements for the cryopreservation of human cells. In view of the issues raised by this directive it is imperative to develop new vitrification techniques that allow for the total isolation of the sample from LN2 during the cooling procedure as well as during long-term storage while still maintaining acceptable survival rates. Stachecki et al. (US 2006/0046243 A1) disclose a method and a container instrument which allow the specimen to be sealed in a sterile container and thus avoiding direct contact with the coolant. Upon indirect exposure to the coolant, the biological specimen undergoes vitrification. One disadvantage of this method is that the decrease in the cooling speed resulting from the heat-insulating barrier of the container negatively affects the vitrification of the biological specimen, thus reducing the viability of the biological specimen. There is a definite need of a vitrification method which allows the specimen to be sealed in a sterile container thus avoiding direct contact with the coolant; allows the viability of the specimen to be maintained, provide adequate time for and ease of cryopreservation and recovery manipulations; and result in high survival rates both on a per embryo and on a per cell basis. The present invention fills that need.

### Summary of the Invention

The present invention relates to a storing instrument used to vitrity and store a mammalian biological specimen.

In a preferred embodiment the storing instrument for vitrification and storing of biological specimen, specifically sperm, oocytes, embryos, morulae or blastocysts comprises a storing member which is made of a liquid nitrogen-resistant material, and a container or protection member for protecting said storing member, the protection member being also made of a liquid nitrogen-resistant material, wherein said storing member comprises a body part, preferably of cylindrical shape, having a cell storing part at a front portion, and having a rear end part at an end portion, wherein the cell storing part is formed as a recess in the body part, and wherein the storing member having a smaller outer dimension that the inner dimension of the protection member so that the storing member may be inserted and accommodated in the protection member. The protection member preferably having a tubular shape. One advantage of the storing instrument according to the invention is, that the biological specimen may be thawed up very fast, in that in a first step the sealed container is removed from the coolant, the storing member is separated from the container, and at least the cell storing part 3b of the storing member 3 is placed in a thaw solution, whereby the biological specimem, accomodated in the cell storing part, gets in direct contact with the thaw solution. The storing instrument according to the invention therefore allows a speed of re-warming of up to 20'000 C°/min, therefore dramatically reducing the exposure time of the thawed biological specimem to cryoprotectants, therefore reducing the toxic effect of cryoprotectants, and therefore increasing the viability of the biological specimen during devitrification.

The present invention relates also to a method of vitrification of a biological specimen. According to the method of the present invention, a biological specimen is in a first step exposed to cryoprotectants (CPs) and is in a second step indirectly exposed to a coolant. The biological specimen which has undergone vitrification may be stored for any period of time, thawed at a later date, and yet is still viable after thawing. Preferred biological specimens according to the present invention are mammalian developmental cells.

The present invention relates to a method of vitrification that includes the use of a storing member which carries the biological specimens, and a tubular protection member in which the storing member may be inserted, the tubular protection member being preferably a sealed container such as a straw, or other minute sterile container that is sealable to hold the storing member containing the biological specimen, with a straw being a preferred container. The sealed container can be placed directly into a coolant such as liquid nitrogen or liquid nitrogen vapors. The straw containing the storing member with the vitrified biological specimen may be stored at ultra-low temperature (typically in liquid nitrogen) until such time as the biological specimen is required for use.

A further aspect of the present invention is the treatment of the biological specimen with one or more cryoprotectants prior to vitrification.

The invention also relates to a method for thawing a biological specimen which has undergone vitrification. The thawing methodology comprises removing the sealed container from the coolant, separating the storing member from the container, and placing the part of the storing member containing the biological specimen in a thaw solution.

The present invention also relates to a kit for the vitrification of a biological specimen. The kit will generally contain instructions describing the vitrification of a biological specimen wherein the specimen is indirectly exposed to a coolant. The kit will also include one or more optional ingredients, including, but not limited to, a container, most preferably a tubular protection member such as a straw, a storing member capable to accomodate the biological specimen, a base medium and a cryoprotectant.

### Detailed Description

In the present application, the following terms are used throughout and are defined for the purposes of this application as follows: Base Medium: A solid or liquid preparation made specifically for the growth, manipulation, transport, or storage of the biological specimen placed therein. Storing instrument: An instrument which comprises a container and a storing member which can be, at least partially, inserted within the container. The container is preferably built as a tubluar member. The biological specimen can be placed in the storing member, the storing member can be introduced into the container, and then the container closed or sealed. Cryopreservation: The preservation of a biological specimen in a viable state at ultra-low temperature. Developmental Cells: A reproductive body of an organism that has the capacity to develop into a new individual organism capable of independent existence. Developmental cells include, but are not limited to, sperm, oocytes, embryos, morulae, blastocysts, and other early embryonic cells, whether aggregated or isolated. Indirectly Exposed: A biological specimen, including a blastocyst and an embryo that resides in a sealed container, is "indirectly exposed" to a freezing material because the biological specimen is not allowed to come into direct contact with the coolant. Coolant: Any material, including but not limited to, liquid gases and their vapors, such as liquid nitrogen, liquid propane, liquid helium, or ethane slush, or dry ice which is capable of causing vitrification of a biological material. Viable: A biological specimen is viable if it retains the ability to function and develop normally for a period of time. Vitrification (Vitrify): A phenomenon wherein a biological specimen is cooled to very low temperatures under such conditions and in such a way that its contents solidify into a glass-like state without undergoing crystallization.

It has been found out that the heat-insulating barrier of such storing instruments dramatically reduces the speed of cooling from - 20,000°C/min to less than -2,000°C/min, which increases the likelihood of lethal ice crystals forming through the crystalline phase.

It has been found out that the decrease in the speed of cooling resulting from the heat-insulating barrier of such storing instruments has to be counteracted by higher intracellular concentrations of cryoprotectants (CPs) without inducing toxic effects. One aspect of the invention was to provide an advantageous exposure protocol for blastocysts to CPs before aseptic cooling and before the clinical application of aseptic vitrification. One advantageous protocol, which permits survival rates of > 80%, consists of exposing blastocysts to 10%, 20%, and 40% Dimethylsulfoxid (DMSO)/ethylene-glycol (EG) for 5-10 min, 4 min, and 45 sec, respectively. The results show the benefits of a stepwise exposure to CPs, which allows blastocysts to be maintained in a vitrified state through the crystalline phase.

Aseptic cooling, by which the embryos are shielded from LN2, may have an adverse effect on embryo survival after warming if the embryos are not sufficiently exposed to the CPs at the beginning. It has been found out that the probability of rendering the intracellular parts into a "glass-like" state depends on the cooling/re-warming speed and the concentration of CPs. It was found out that the likelihood of ice crystal formation will increase if the cells have not been exposed to CP solutions long enough. A solution can only be converted to a glass-like state if its temperature is very rapidly lowered beneath the glass transition temperature (Tg). Before reaching this Tg, the solution very rapidly has to cross a temperature zone in which there is a high risk of ice crystal formation. Increasing the concentration and viscosity of the medium can narrow the bandwidth of this "danger zone." Consequently, the decrease in the speed of cooling and re-warming, as observed with aseptic devices, has to be counteracted by higher intra- and extra-cellular concentrations of CPs.

The invention found an advantageous balance between the necessary quantity of CPs and the speed of cooling and re-warming with aseptic devices so that a vitrified state can be obtained without inducing cell toxicity. A known practice when working with ultra-rapid vitrification of embryos at different stages of development is using a Straw as a carrier device. After two short exposures (2-4 min in a first CP solution and 30 sec in a second CP solution), embryos are placed on the tip of a small gutter of the straw before plunging them directly into LN2. Such a strategy allows for an overall survival rate of 77% after ultra-rapid vitrification of the blastocysts (Vanderzwalmen P, Bertin G, Debauche C, Standaert V, Bollen N, van Roosendaal E, Vandervorst M, Schoysman R, Zech N. 2003. Vitrification of human blastocysts with the Hemi-Straw carrier: application of assisted hatching after thawing. Hum Reprod 18(7):1504-1511). However, as mentioned earlier, European regulations now require to cool and store embryos in an aseptic manner. Due to the thermo-insulation effect of the storing instrument, the conditions were modified by which blastocysts were exposed to CPs in order to increase the intracellular concentration of the CPs and facilitate the vitrification process.

The method according to the invention could determine, based on the restriciton of a decreased cooling rate, an advantageous exposure time for blastocysts to CPs before aseptic vitrification. These issues are crucial for carrier devices that guarantee the medical safety of vitrified human embryos.

This invention is illustrated further by the following nonlimiting Examples. Before applying aseptic vitrification of blastocysts to surplus human embryos, a vitrification procedure was developed using mouse and surplus human embryos.

### Exampel 1: Mouse embryo recovery and culture

Five to 7 weeks old FVB/N or C57B1/6J mouse strains (Charles River, France) were hyperstimulated with 3.5 IU of PMSG (Folligon, Intervet, The Netherlands) injected intraperitoneally, followed by an injection of 5 IU of hCG (Chorulon, Intervet, The Netherlands) 48h later. Soon after, each female was placed in a cage with an identical male. The mice presenting a vaginal plug were sacrificed either on day 0.5 post coitum to collect the zygotes after surgical opening of the ampullary or on day 3.5 to harvest the blastocysts by washing the uterine horns with homemade M2 medium. The in vitro development of the embryos was carried out in 50µL drops of homemade M16 medium, covered with oil (Fertipro-Bernem-Belgium), in a humidified 5% CO2 incubator at 37.5°C. Criteria for survival were established by assessing zygotes according to the percentage that developed to the expanded and hatched blastocyst stages and in case of experiments with blastocysts according to the percentage that fully hatched after 24h of further culture.

### Exampel 2: Human blastocysts

Stimulation protocols, in vitro fertilization procedures, and embryo culture techniques were the same as described previously (Zech N, Lejeune B, Puissant F et al. 2007. Prospective evaluation of the optimal time for selecting a single embryo for transfer: day 3 versus day 5. Fertil Steril 88, 244-246).
An aseptic vitrification protocol was developed using supernumerary blastocysts otherwise not eligible for a fresh embryo transfer or for cryopreservation and a next transfer cycle and after informed consent of the patients. In vitro survival of vitrified blastocysts was evaluated immediately after warming and after 24h of further culture.

### Design of an aseptic vitrification protocol:

### Embryo carrier devices

Before developing an aseptic embryo carrier device, the first goal was to define the optimal steps and the minimally required exposure times of embryos to the CP solutions in reduced cooling conditions. For this purpose, a classical HS (Hemi-Straw) was used in its usual non-aseptic way as well as in an aseptic way.

### 1) Non-aseptic embryo carrier: Hemi-Straw

The Hemi-Straw (HS) previously described by Vanderzwalmen et al. (2003), is an embryo carrier that consists of a large gutter on which a small quantity of CPs (< 1 µl) containing the embryos is deposited. An ultra-rapid cooling rate of > -20,000°C/min is achieved by allowing direct contact of the biological material with LN2. The HS was subsequently inserted into a larger pre-cooled 0.5 ml straw under LN2.
The HS was first pulled out of the larger straw under LN2 prior to the commencement of the warming process. In order to achieve a warming rate of > 20,000C/min, the tip of the HS was instantaneously immersed into a petri dish containing a sucrose solution.

### 2) Aseptic HS device (AsHS)

First, the embryos were placed on the HS in the same way as described above. However, before plunging the biological material into LN2, the HS was inserted into a larger 0.5 ml straw in order to avoid direct contact of the CP solution carrying the embryos with LN2. The 0.5 ml straw containing the HS was plunged into LN2 only after this step. Under these conditions, the cooling rate decreased from > - 20,000°C/min to < -1,000°C/min.

The warming procedure was similar to the one applied with the HS, which allowed to obtain an ultra-rapid re-warming of > 20,000°C/min.

### Solutions used for vitrification and dilution after warming:

Three non-vitrifying solutions (nvS), nvS 2.5/2.5, nvS 5/5, and nvS 10/10 were prepared. "nvS 2.5/2.5" meaning a non-vitrifying solution consisting of 2.5% ethylene glycol (EG) (v/v) - 2.5% dimethylsulphoxide (DMSO) (v/v), "nvS 5/5" meaning a solution consisting of 5% EG (v/v) - 5% DMSO (v/v) (nvS 5/5) (Fertipro, Bernem, Belgium), and so on. The nvS 2.5/2.5 and nvS 5/5 solutions were prepared by diluting nvS 10/10 with Global - HEPES (IVF online). The nvS 10/10 solution contained 10% ethylene glycol (EG) (v/v) - 10% dimethylsulphoxide (DMSO) (v/v) (Fertipro, Bernem, Belgium). The vS 20/20 vitrification solution was composed of 20% EG (v/v) - 20% DMSO (v/v), 25 µmol/l (10 mg/ml) Ficoll (70,000 MW), and 0.75 mol/l sucrose (Fertipro, Bernem, Belgium).
The solutions for warming were made of 1, 0.5, 0.25, and 0.125 mol/l sucrose in PBS-10% HSA or Global HEPES, and 10% HSA. The embryos were left in the different solutions for 2 min, 3 min, 4 min, and 4 min respectively.

### Development of an aseptic vitrification protocol: experimental set-up

### 1) Mouse model

In a first step, the survival rates of mouse zygotes was compared after slow or ultra-rapid cooling in relation to the duration of exposure to CPs. Mouse embryos at different developmental stages (zygotes and blastocysts) were used to analyze the effects of reduced cooling rates as well as of the CPs' toxicity.

### Experiment 1: Consequences of a reduced cooling rate on the capacity of zygotes to develop to the hatched blastocyst stage:

The zygotes were allocated randomly to either one of two groups according to the cooling procedure. Before cooling they had been exposed to the nvS 10/10 for 30 sec and at room temperature (22-24°C) (RT) for up to 10 min. They were then exposed to vS 20/20 for 30-40 sec before being placed on the HS. At this stage, two different cooling procedures were studied. Either the HS was directly plunged into LN2 or placed 10 cm above the ceiling of LN2 vapor for 5 min before being plunged into LN2. As part of the warming procedure, the tips of the HS carrying the embryos were plunged directly into a solution of 1 M sucrose before further dilution and embryo culture up to the hatching stage (day 5.5).

### Experiment 2: Studies on the toxicity of nvS 10/10 and vS 20/20 on blastocysts

Mouse blastocysts were first exposed to nvS 10/10 for 3 min, 6 min, 9 or 12 min at RT and then transferred into the vitrification solution vS 20/20 for 30 sec, 60 sec, 90 sec, or 120 sec. After being exposed to CPs the embryos were passed through different sucrose solutions, with decreasing concentration gradients, before being cultured for another 24h and analyzed thereafter.

### 2) Human model

### Experiment 1: Analysis of the effect of cooling rate reduction on the "in vitro" development of human blastocysts

As mentioned previously, vitrification in aseptic conditions (AsHS) decreases cooling rates to < -2,000°C/min because of thermal insulation. The effects of a decreased cooling speed were studied on the "in vitro" capacity of human blastocysts to re-expand after 24h of further culture.
One group of blastocysts was vitrified in non-aseptic conditions using the regular HS vitrification technique (> -20,000°C/min), and the other group was vitrified in aseptic conditions using the AsHS device (< -1,000°C/min). Before both cooling processes, the blastocysts were exposed to the CPs in conditions similar to those applied in ultra-rapid vitrification. After exposing the embryos to nvS 10/10 for 3-4 min, they were placed into vS 20/20 for 30-40 sec at RT. Ultra-rapid warming rates of > 20,000°C/min were achieved by plunging the tips of the HS carrying the embryos directly into a solution of 1 M sucrose before further dilution and embryo culture up to the hatching stage.

### Experiment 2: Analysis of the optimal exposure conditions for blastocysts to CPs before aseptic vitrification

According to the previous experiment with the mouse and human model, a longer exposure time to CP solutions seems to be necessary in order to guarantee and maintain intercellular parts in a glass-like state when the cooling rate decreases. Different experiments were designed with the aim of establishing the optimal conditions in which to prepare blastocysts before they are cooled in aseptic conditions. All the experiments were performed at RT.

### Effect of prolonging exposure time to nvS 10/10 on blastocysts:

In this experiment, the AsHS device was used. One group of embryos was exposed to nvS 10/10 for 3 min and the other group to the same solution for 8 min. After this step, the embryos were exposed to the vS 20/20 solution for 30-40 sec before being plunged into LN2 in an aseptic fashion.

### EFFECT OF A GRADUAL EXPOSURE OF BLASTOCYSTS TO THE NON-VITRIFYING CPS:

The embryos were first exposed to the non-vitrifying solutions for different time intervals before being exposed to nvS 10/10 for 3-4 min. In the first group, CP was added to the embryos in a very gentle way by first placing the blastocysts in nvS 2.5/2.5 for 5 min followed by equilibration in nvS 5/5 for 10 min. In the second group, embryos were directly placed in nvS 5/5 for either 5 min or 10 min. After exposure and equilibration in the 3 different solutions, the embryos were put into vS 20/20 for a period of 40-50 sec and aseptically vitrified using the AsHS device.

### Experiment 3: Effect of the exposure time in vS 20/20 on embryos:

The blastocysts were exposed to nvS 5/5 for 5 min and thereafter to nvS 10/10 for 4 min followed by vS 20/20 for two different periods of 60 sec and 90 sec before being plunged into LN2 using the AsHS device.

### 3) Warming procedure:

The warming procedures were identical for both vitrification devices used (HS or AsHS). A dewar of LN2 containing either the HS or the AHS device was placed close to the microscope. The devices were pulled out of the larger straw under LN2 with forceps, and the tip of the straw holding the embryos was immediately immersed into a petri dish containing 3 ml of 1 mol/l sucrose at 37°C. After 2 min, the blastocysts were transferred to 0.5, 0.25, and 0.125mol/l sucrose at intervals of 4 min. The blastocysts were then washed several times in Global medium (IVF Online) and cultured for an additional period of 24h.

### Results:

It has been investigated whether there was a correlation between the exposure times of embryos to CPs and the cooling rate by analyzing the survival rate of mouse zygotes (FVB strain) and their potential to hatch in the blastocyst stage according to different exposure times to CP (1 min, 2 min, 3 min, 5 min, or 10 min in nvS 10/10) followed by ultra-short (plunged directly into LN2) or reduced cooling (5 min in the vapor before plunging the embryos into LN2). As presented in Table 1, a longer exposure time to nvS 10/10 is necessary to protect the cells in the case of a reduced cooling rate. Table 1 has to be read as follows: "14/20" (in the first row, after "Directly in LN2") for example means out of 20 zygtoes that were vitrified 14 survived, "18/20" means 18 out of 20 survived, and so on.

Table 2 shows the "in vitro" developmental capacity of mouse blastocysts according to both the different exposure times and the different mixtures of DMSO and EG. No adverse effects were observed connected with a prolonged exposure of embryos to vS 20/20 for up to 90 sec if the blastocysts were first placed in nvS 10/10 for a maximum of 9 min. In the case of shorter exposure times in nsV 10/10, 100% of the blastocysts hatched even when the exposure time to vS 20/20 was increased to 180 sec.

The in vitro development of blastocysts vitrified in aseptic and non-aseptic conditions after a short exposure (4 min maximum) to nvS 10/10 is shown in Table 3. A twofold increase in survival rates was observed when the speed of cooling was > -20,000C°/min. A decrease in the cooling rate to < -2,000C°/min dramatically reduced the survival rate to 35%.

Table 4 highlights the benefit of increasing the exposure time in the nvS 10/10 to 7-8 min before applying aseptic vitrification. An increase in the survival rate to 55% was noticed after extending the exposure time beyond 2-4 min.

Table 5 shows the results of a pre-incubation of blastocysts in nvS 5/5 for different time periods. As compared to the one-step addition to nvS 10/10, a survival rate of almost 90% was observed when incubation in nvS 5/5 was performed first. No difference in survival rates was observed regardless of whether the blastocysts were exposed to nvS 5/5 for 5 min or 10 min.

The in vitro survival in relation to the exposure time of blastocysts to the nvS 20/20 vitrification solution is shown in Table 6. No adverse effect was observed even after a contact period of 90 sec in nvS 20/20.

The advantage of ultra-rapid cooling is that cells are exposed to increased concentrations of CPs for only a short period of time. However, one of the major drawbacks of ultra-rapid cooling is the direct contact of the biological sample with LN2 and the added risk of bacterial as well as viral contamination. In order to achieve aseptic vitrification in compliance with the EU directive on tissues and cells (Directive 2006/17/CE), one objective of the invention was to establish a method that guarantees good survival rates after the complete separation of human embryos from LN2 during cooling and storage.

It has been found out that a reduction in the cooling rate-due to aseptic conditions-in conjunction with optimized exposure times and the composition of the different non-vitrifying and vitrifying solutions, permits high "in vitro" survival rates of mouse and human embryos.

The development of an aseptic system led to a modifyed vitrification strategy. It turned out that the larger protective straw, which is required to achieve aseptic vitrification, inevitably leads to an extreme loss in the cooling rate. It has been observed that, if the commonly used protocols to prepare embryos before ultra-rapid cooling were applied, the decrease in the cooling rate from > -20,000°C/min to < - 2,000°C/min was detrimental to embryo survival. In the case of non-aseptic vitrification, blastocysts were exposed directly in a non-vitrifying solution (nvS 10/10) for a maximum of 3-4 min. When the exposure time to nvS 10/10 was too short, the intracellular concentration of CPs did not reach a sufficient threshold to prevent ice crystal formation during the slower transit before Tg was reached. In the case of non-aseptic conditions, Tg was reached so fast that the probability of intracellular ice crystal formation was reduced even though only a limited amount of CPs was inside the cells.

The experiments on mouse zygotes further corroborate these findings. In fact, it has been observed that only a very low number of mouse zygotes developed to the hatching blastocysts stage when the embryos were pre-cooled in vapor instead of being directly plunged into LN2 after a brief exposure to nvS 10/10. The same was observed with human blastocysts. It has been noticed more than a twofold decrease in the capacity of human blastocysts to develop further when they were aseptically vitrified after being exposed to nvS 10/10 for the same time period as in the non-aseptic protocol.

The intracellular viscosity has been increased by increasing the exposure time to CPs in order to counteract the increased likelihood of ice crystals forming as a result of the reduced cooling rates of non-aseptic devices. It was possible to confirm that the rate of zygotes developing to the hatching blastocysts stage in the murine model is directly related to the speed of cooling and to the exposure time to CPs. A longer exposure time to the first solution (nvs 10/10) is necessary when aseptic cooling is applied in ultra-rapid cooling conditions if equivalent rates of hatched blastocysts are to be obtained.

It turned out that the simplest and most logical way to increase the intracellular concentration of CPs is to expose embryos to the non-vitrifying nsV 10/10 solution for a longer period. An increase in the survival rate from 20% to 80% was observed when embryos were exposed to this solution for a longer period (8-10 min) prior to aseptic vitrification, as compared to 4 min of contact with the nvS 10/10 under aseptic conditions. However, only 55% of these embryos re-expanded after 24 hours.

When looking at the results, the question arises as to the reasons for the drop in the re-expansion rate after 24 hours of further culture when blastocysts are placed directly into nvS 10/10 for a prolonged period. The fact that blastocysts of a poor quality were used that are not suitable for fresh embryo transfer or cryopreservation may be one part of the explanation. Another reason may be that prolonged exposure to nvS 10/10 allows too much CP to enter cells and that a further concentration of CPs in the presence of vS 20/20 most likely induces a toxic effect that interferes with the re-expansion of the blastocysts after 24 hours of further culture. Longer exposure to nvS10/10 most likely has a rather dramatic effect on embryos because of the excessive dehydration caused by osmotic shock, which is accompanied by a reduction of more than 50% of the initial volume seen.

Detrimental effects on cell survival will inevitably occur if embryos are exposed to the different solutions in the wrong way, in an attempt to achieve the minimum concentration of intracellular CPs necessary to prevent the phenomenon of crystallization during the cooling and warming steps. When blastocysts are placed into the vS 20/20 vitrification solution, dehydration takes place immediately. This leads to a concentration of intracellular proteins and salts as well as CPs, which have mainly penetrated through the cell membranes in the nvS 10/10 during the first step. The key to success lies in finding the optimal concentrations of CPs in the "non-vitrifying" solution for penetrating the cells without inducing a toxic effect while still achieving vitrification of the intracellular parts and maintaining it at critical cooling rates of < -2,000°C/min.

The effects of different exposure times and different concentrations of CPs on the viability of vitrified and thawed embryos were studied in order to shed some light on the issue of reduced re-expansion rates after 24 hours of further culture following vitrification. Instead of exposing blastocysts directly to nvS 10/10, they were gradually exposed to increasing concentrations of CPs using different time intervals for the different steps. More than 95% of the blastocysts survived, and of these 90% re-expanded 24 hours after warming. A pre-equilibration in a lower concentration of CPs (nvS 2.5/2.5 and nvS 5/5) followed by a short exposure to nvS 10/10 proved to be beneficial. Such observations reinforce the notion that osmotic stress induced by dehydration that is too strong and too fast may harm embryos.

If the steps that occur during conventional slow freezing are considered, it may be noted that traditional methods of freezing consist of an equilibration step for embryos at RT with around 10% v/v of permeable CPs. This is followed by a slow cooling step (-0.3°C/min), which leads to an exchange of water between the cells and their surroundings. During the slow cooling process the osmolarity of the extracellular solution increases as water begins to turn into ice crystals. Cells respond to this with dehydration in order to maintain osmotic balance on both sides of their membranes. This progressive dehydration of embryos during cooling leads to a concentration of intracellular proteins and salts as well as CPs. These substances have penetrated through the cell membranes during the 10 min equilibration and have to be adequately solidified at the end of the slow cooling process if intracellular ice crystal formation is to be prevented when embryos are plunged into LN2. Since blastocysts survive the slow cooling steps to -30°C / -40°C before being plunged into LN2, it can be assumed that their survival is due to the establishment of an amorphous state inside the blastomeres and the cavity prior to contact with LN2.

Aspects of slow freezing were incorporated into the aseptic vitrification protocol according to the invention, whereby blastocysts are equilibrated in less concentrated CPs before being exposed to higher concentrated CPs. The first equilibration step of 10 min is similar to the one that occurs during slow freezing, which allows the permeable CPs (i.e.: non-vitrifying solution) to fully penetrate the embryos. Contrary to slow freezing, in which dehydration occurs during the cooling step, dehydration of cells in the vitrification protocol according to the invention occurs during the progressive addition of CPs. When embryos are placed into the vitrifying solution (vS 20/20), CPs that have fully penetrated the embryos during the first step (nvS 5/5) and partially during the second step (nvS 10/10) solidify during the short dehydration period, which is induced by vS 20/20. Only then is it possible to attain intracellular amorphous conditions before cooling.

An increase in survival rates may also be due to a reduction of the osmotic shock (3 insignificant osmotic jumps instead of 2 large osmotic shocks) rather than to a reduction in CP concentrations. For this reason, the effects of decreasing the incubation time of embryos in the nvS 5/5 solution were studied. The same survival rates were observed when the incubation time in nvS 5/5 solution was between 5 and 10 minutes.

The lower percentage of blastocysts that re-expanded after 24 hours might be due to a dramatic osmotic shock, and so it was speculated that additional steps may be beneficial and decrease the osmotic shock. Survival was very low when equilibration was performed in two steps.

Furthermore, the exposure time to vS 20/20 required to reach the minimal intracellular viscosity necessary for maintaining a vitrifying state during cooling is also very crucial, because prolonged exposure time leads to embryo toxicity. The studies on mouse and human embryos have shown that high survival rates may still be obtained when mouse and human embryos are exposed to vS 20/20 for 120 and 90 sec, respectively. This gives a more than enough time to handle the embryos before cooling. It has been observed that an exposure of almost 90 sec had no adverse effect on the further "in vitro" development of human blastocysts.

If the thermo-insulating effect causes a drop in the cooling rate to < - 1,500°C/min, the warming rate has to be kept very high to guarantee good embryo survival rates. The aseptic device for vitrification according to the invention was conceived to achieve warming rates of > 20,000°C/min and still maintain aseptic conditions. Indeed, ultra-fast warming rates can be achieved by keeping the AsHS device under LN2 while extracting the embryos from the gutter and instantly plunging them into a solution of sucrose. This rapid warming process is crucial if a vitrifying state is to be maintained during the initiation of the dilution steps. The ultra-rapid warming is of major significance because a given CP concentration makes it easier to obtain a glass-like state during cooling-even with reduced cooling rates-than to maintain it during the initiation of warming. Consequently, the minimum concentrations in CPs necessary to prevent ice crystal formation are higher for warming than for cooling for a predetermined speed of cooling and warming.

It is essential to determine the correct balance between the intracellular amount of CPs and the cooling rate in order to limit problems of toxicity and ensure an acceptable survival rate. This has to be done in relation to the different types of embryos, all of which have their own biophysical properties. The results show the benefits of a stepwise addition of CPs in maintaining embryo vitrification through the crystalline phase. Such an approach is very flexible and allows the handling of the embryos without the pressure of time.

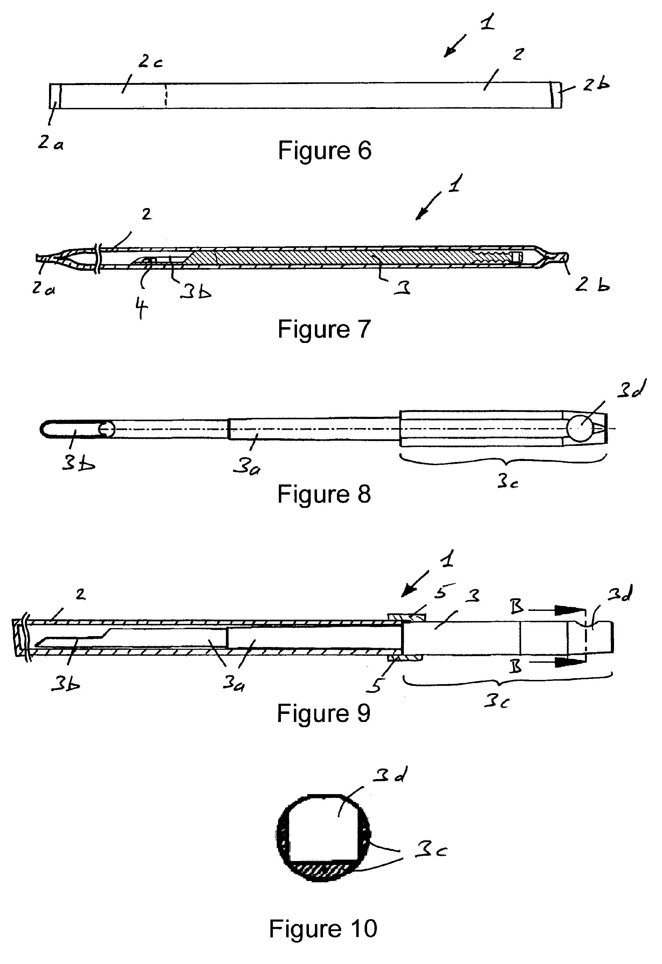

Table 7 shows a further example of two solutions used for vitrification. For example mouse zygotes are first dipped in a non-vitrifying solution (nvS) VS1 and afterwards dipped in a vitrification solution (vS) VS2. The composition of the non-vitrifying solution VS1 and the vitrification solution VS2 are disclosed in Table 7. Table 8 shows the change of volumina of the mouse zygotes in relation to the exposure of the VS1 and VS2 cryoprotectant solution versus time. Starting from an isotonic solution, the mouse zygotes are exposed for 180 seconds to the VS1 solution, where the zygotes undergo dehydration and where the cryoprotectant VS1 partially enters the zygotes. The zygotes are then exposed for 80 seconds to the VS2 solution where the zygoes reaches a vitrified status. At least two different cryoprotectant solutions VS1, VS2 are needed to reach this status. It might be advantageous to use more the two different cryoprotectant solutions VS1, VS2. After the exposure of the zygotes to the VS2 solution, the zygotes 4 are placed on a cell storing part 3b of a storing member 3, for example as disclosed in figure 7. Most advantageously a maximum of two zygotes 4 are placed on the cell stroing part 3b, preferably within a micro-drop of the VS2 solution. The micro-drop for exampel having a volumina of less than 1µl. The storing member 3 is then inserted into a protection member 2, which then is sealed and then brought into liquid nitrogen (LN2). For rewarming, in a preferred method, the storing member 3 is removed from the protection member 2, and the cell storing part 3b containing the cells (such as zygotes) is directly dipped into a saccharose solution (for example of 1 to 0,33 molar concentration, in particular depending on the exposition duration of the cells in the VS1 solution). Such a method allows a very fast rewarming rate of between 5000 °C/min to 20000 °C/min. One advantage of such a fast rewarming rate is, that the rewarming cell is exposed only during a very short period of time to the cryoprotectant in which the cell was stored, because the saccarose solution reduces the concentration rate of the cryoprotectant in a very short time. The cells may be further diluted with saccharose solutions of decreasing concentration.

### Brief Description of the Drawings

- Fig. 1: is a top view showing a first embodiment of a storing member of the present invention for freezing and storing mammalian biological specimen;
- Fig. 2: is a sectional view of the storing member shown in Fig. 1 along the line A-A;
- Fig. 3: is a bottom view of the storing member shown in Fig. 1;
- Fig. 4: is a front view of the storing member shown in Fig. 1;
- Fig. 5: is an enlarged sectional view of the rear end part of the storing member shown in Fig. 1;
- Fig. 6: is a top view showing an embodiment of a protection member;
- Fig. 7: is a sectional view showing a storing instrument comprising the protection member, wherein the storing member is inserted;
- Fig. 8: is a top view showing a second embodiment of a storing member for freezing and storing mammalian biological specimen;
- Fig. 9: is a side view of the storing member shown in Fig. 8;
- Fig. 10: is an enlarged sectional view along the line B-B of the bore of the storing member shown in Fig. 9;
- Fig. 11: is a perspective view showing the second embodiment of the storing member shown in Figures 8 to 10.

### Detailed Description of the preferred Embodiments

The embodiments of the storing instrument of the present invention will be described below with reference to drawings.

Fig. 7 is a sectional view showing an embodiment of a storing instrument 1 comprising a tubular protection member 2, wherein a storing member 3 carrying the biological specimen 4 is inserted. The protection member 2 is made of a liquid nitrogen-resistant material and can be heat-sealed. In a preferred embodiment the protection member 2 comprises a first sealed end 2a. In a preferred method step the storing member 3 carrying the biological specimen 4 is inserted into the protection member 2, the second end 2b of the protection member 2 is then heat-sealed, and the protection member 2 is then inserted into liquid nitrogen. Fig. 6 is a top view of a protection member 2 having two seald ends 2a, 2b. The storing member 3, being arranged within the protection member 2, is not shown. In a preferred embodiment the protection member 2 comprises a marker 2c.

The full length of the storing instrument 1 or the storing member 3 is set to favorably 50 to 100 mm. More favorably the storing member 3 having a length of 50 to 60 mm. The diameter of the storing member 3 is set to favorably 1 mm to 3 mm, and more favorably 1,5 mm to 2,5 mm. The protection member 2 having an inner volume of favorably 0,1 to 5 ml, and more favorably 0,3 to 0,8 ml.

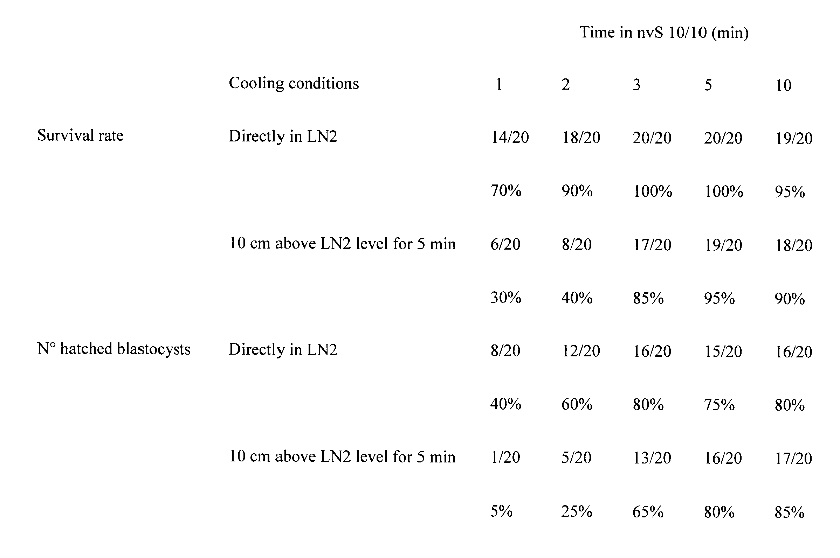

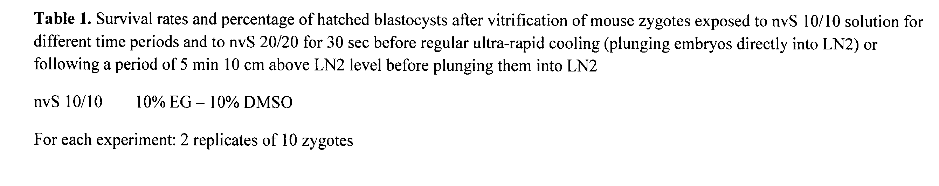

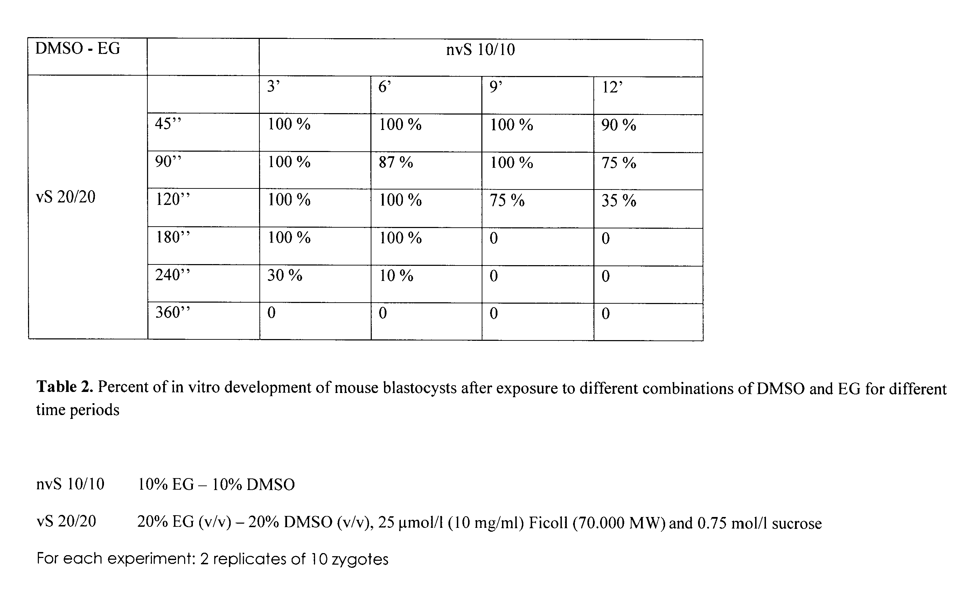

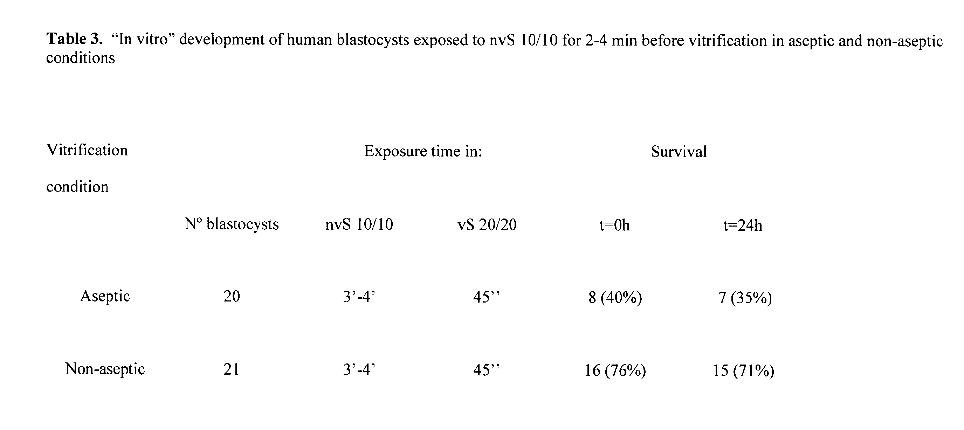

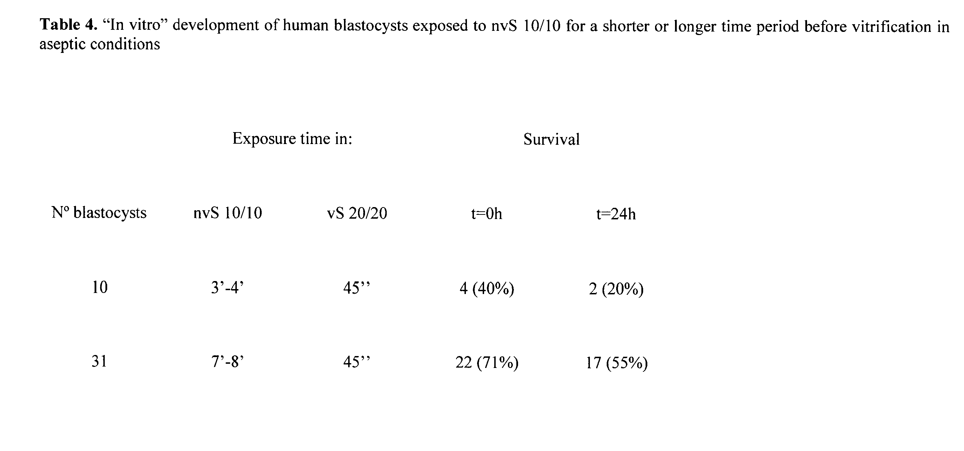

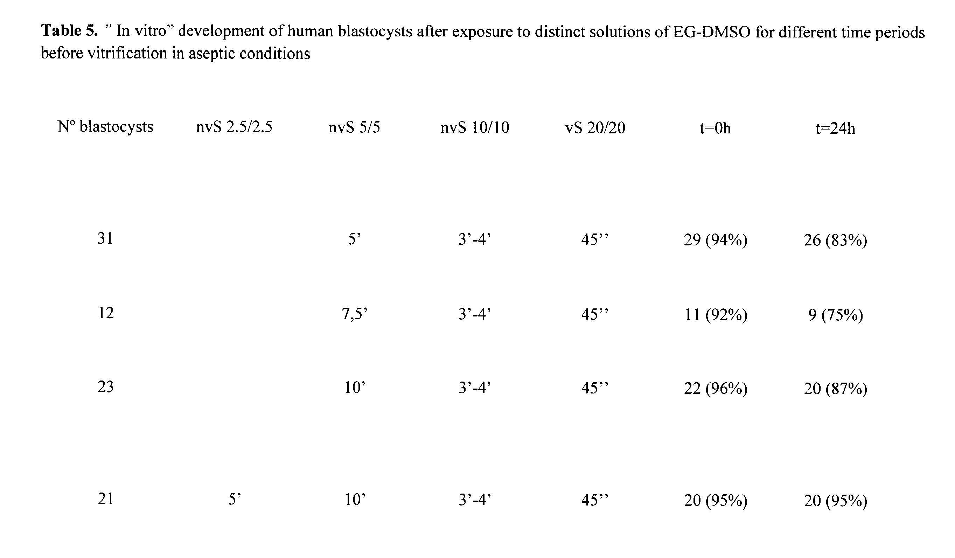

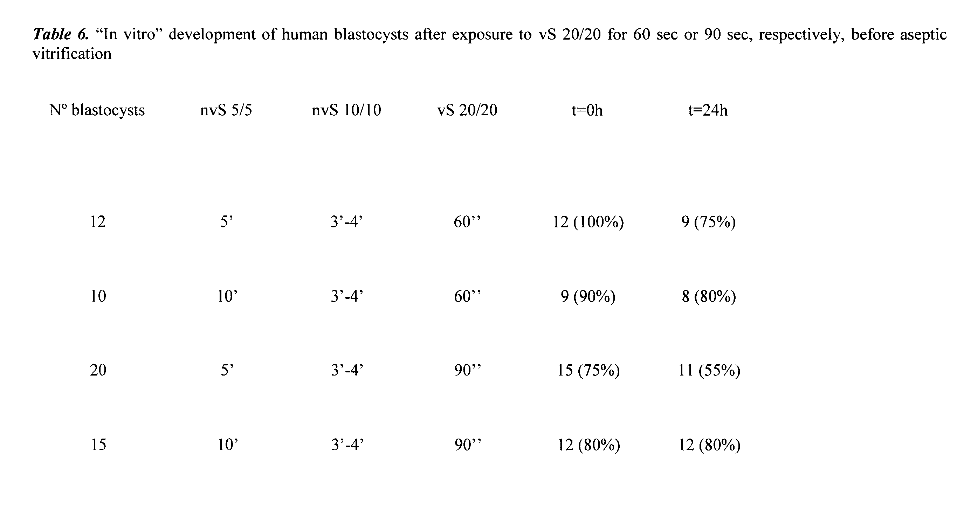

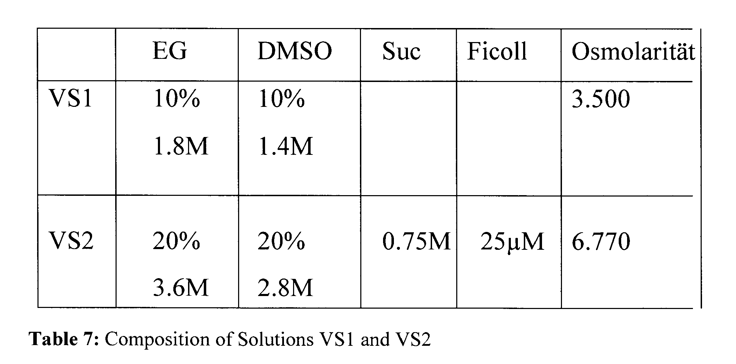

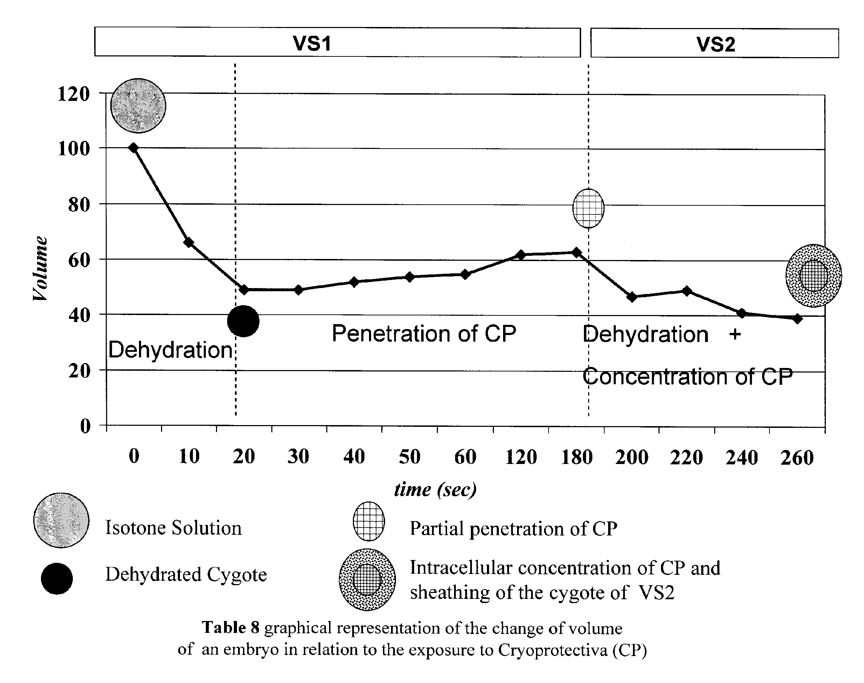

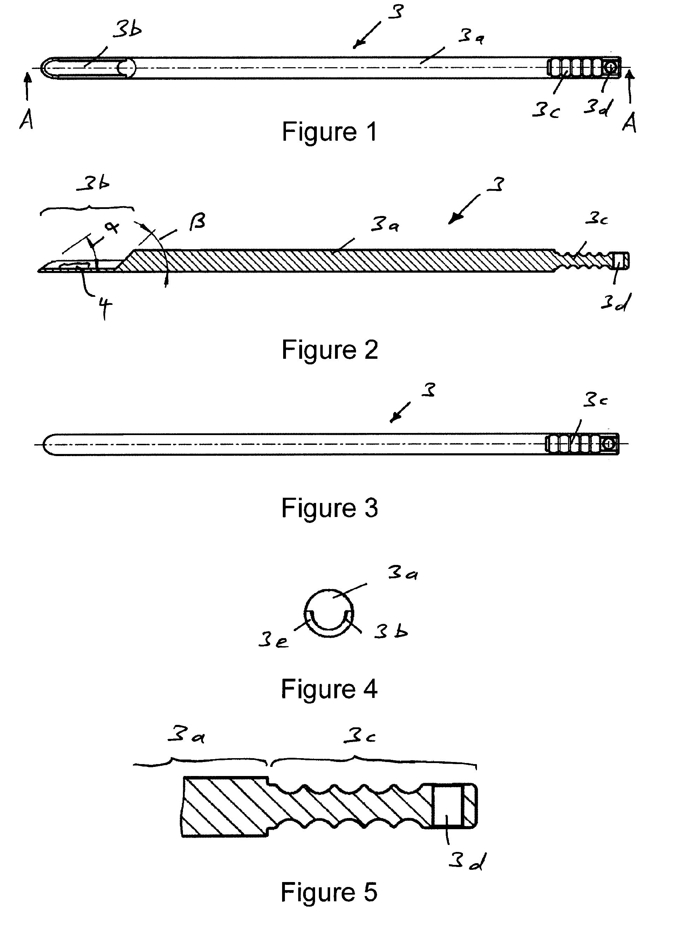

Fig. 1 is a top view showing a storing member 3. The storing member 3 has a cylindrical body part 3a having a cell storing part 3b at a front portion and having a rear end part 3c at an end portion. In the embodiment disclosed, the cell storing part 3b is formed as a recess in the body part 3a. Fig. 2 is a section view of the storing member 3 along the line A-A. A sample 4 is accommodated in the cell storing part 3b. The front part of the cell storing part 3b having an angle α and the end part of the cell storing part 3b having a larger angle β. Fig. 3 is a bottom view of the storing member 3. Fig. 4 is a front view of the storing member 3, in particular showing the shape of the cell storing part 3b which in the embodiment disclosed has a u-shaped side wall 3e. The side wall 3e preferably having a thickness of between 0,05 mm and 0,3 mm. The cell storing part 3b has, in a preferred embodiment, a length in axial direction of between 1 mm and 10 mm. Fig. 5 is an enlarged sectional view of the rear end part 3c of the storing member 3, the end part 3c having a bore 3d, and the end part 3c having a reduced thickness, compared with the body part 3a.

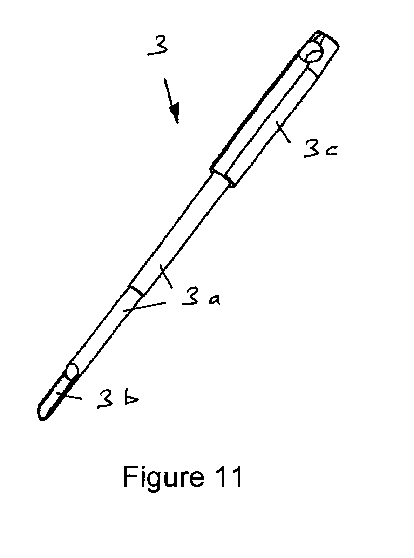

Fig. 8 is a top view, Fig. 9 a side view and Fig. 11 a perspective view of a second embodiment of a storing member 3, comprising a body part 3a, a cell storing part 3b and a rear end part 3c with a bore 3d. The read end part 3c having a larger diameter than the body part 3a. Fig. 10 is an enlarged sectional view of the bore 3d along the line B-B. In a preferred embodiment the bore 3d may be filled with a weight, to make sure that the storing instrument 1 sinks in the liquid nitrogen. In an advantageous embodiment the storing member 3 may be inserted completely within the protection member 2, as for example disclosed in figures 6 and 7, in that the diameter of the rear end part 3c is smaller that the inner diameter of the protection member 2, so that the storing member 3 may completetly be inserted into the protection member 2, and the end 2a, 2b sealed. In a further advantageous embodiment the rear end part 3c has such a diameter that the end part 3c can not be inserted into the protection member 2, as disclosed in Fig. 9, so that, for example, only the body part 3a and the cell storing part 3b may be arranged within the protection member 2. The body part 3a may have a conical shape with increasing diameter towards the rear end part 3c. The protection member 2 and the storing member 3 are built such that they aseptically seal. Various methods, not disclosed in detail, could be used to provide aseptic sealing. For example the end part of the protection member 2 and the body part 3a could be sealed by using ultrasound, leading to a tight and aseptic connection between the protection member 2 and the body part 3a. In a further embodiment an additional sealing part 5 could be arranged where the protection member 2 meets the read end part 3c, the sealing part 5 surrounding the protection member 2 and the rear end part 3c and being connected, for example by ultrasound welding, to both, the protection member 2 and the rear end part 3c, to therefore provide an aseptic connection between the protection member 2 and the rear end part 3c. The sealing part 5 could comprise a predetermined breaking point to easely detach the storing member 3 from the protection member 2. One advantage of the storing instrument 1 disclosed in Fig. 9 is the fact, that after removing the storing instrument 1 from the liquid nitrogen, the storing member 3 can easily be pulled out off the protection member 2. In a further embodiment the whole storing instrument 1 disclosed in Fig. 9 may be covered by an additional thin protectiv layer, which aseptically wraps the whole storing instrument 1.

The protection member 2 is made of the liquid nitrogen-resistant material and can be heat-sealed. The following thermoplastic resins may be used as the material for the protection member 2: polyester (for example, polyethylene terephthalate, polybutylene terephthalate); polyolefin (for example, polyethylene, ultra-high-molecular-weight polyethylene, polypropylene, ethylene-propylene copolymer, ethylenevinyl acetate copolymer), styrene resin (for example, polystyrene, methacrylate-styrene copolymer, methacrylate-butylene-styrene copolymer); and polyamide (for example, nylon 6, nylon 66).

## Claims

1. Storing instrument (1) for vitrification and storing of biological specimen, specifically sperm, oocytes, embryos, morulae or blastocysts comprising:
a storing member (3) which is made of a liquid nitrogen-resistant material, and
a tubular protection member (2) for protecting said storing member (3), the tubular protection member (2) being also made of a liquid nitrogen-resistant material,
wherein said storing member (3) comprises a cylindrical body part (3a) having a cell storing part (3b) at a front portion, and having a rear end part (3c) at an end portion,
wherein the cell storing part (3b) is formed as a recess in the body part (3a), and
wherein the storing member (3) having a smaller outer diameter that the inner diameter of the tubular protection member (2) so that the storing member (3) may be inserted and accommodated in the tubular protection member (2).

2. The instrument according to claim 1, wherein the tubular protection member (2) is made of a material that can be heat-sealed.

3. The instrument according to one of the preceding claims, wherein the storing member (3) having an outer diameter of 0.5 mm to 3 mm.

4. The instrument according to one of the preceding claims, wherein cell storing part (3b) has a u-shaped side wall (3e).

5. The instrument according to claim 4 wherein the u-shaped side wall (3e) having a thickness of 0,05 mm to 0,3 mm.

6. The instrument according to one of the preceding claims, wherein the cell storing part (3b) having a length of 1 mm to 10 mm.

7. A method for vitrification and storing a biological specimen (4), in particular using an instrument (1) according to one of the preceding claims, and comprising the steps:
a) treating the biological specimen (4) with at least two different cryoprotectants, a non-vitrifying solution (VS1) and a vitrification solution (VS2); and
b) loading the biological specimen (4) in the instrument (1), and
c) sealing the instrument (1); and
d) placing the instrument (1) containing the biological specimen (4) into a coolant such a LN2, such that the biological specimen is indirectly exposed to the coolant; and
e) storing the instrument (1) containing the biological specimen (4) which has undergone vitrification until the biological specimen (4) is ready to be devitrified; and
f) removing the instrument (1) from the coolant; and
g) allowing the biological specimen (4) to devitrify by placing the biological specimen (4) in a saccarose solution.

8. The method according to claim 7, treating the biological specimen (4) consecutively with at least two different non-vitrifying solutions (VS1, VS3).

9. The method according to claim 7 or 8, devitrifying the biological specimen (4) by directly placing a cell storing part (3b) of the instrument (1) containing the biological specimen (4) in the saccarose solution.
